# EUROPEAN PATENT APPLICATION

(11) **EP 4 725 899 A1**
(43) Date of publication of application: **15.04.2026**
(21) Application number: 23940854.5
(22) Date of filing: 07.11.2023
(51) Int. Cl.: C01B 21/086, C01B 21/093, H01M 10/0568

(54) **METHOD FOR PREPARING CARBONATE SOLUTION OF ALKALI METAL OR ALKALINE EARTH METAL BIS(FLUOROSULFONYL)IMIDE**

(30) Priority: 08.06.2023 KR 20230073701
(71) Applicant: EP CHEMTECH CO., LTD., Chungcheongbuk-do 27651 (KR)
(72) Inventor: LEE, Sung Kwun, Ansan-si, Gyeonggi-do 15539 (KR); LEE, Soon Ho, Gunsan-si, Jeollabuk-do 54082 (KR); LEE, Hee Jin, Gunsan-si, Jeollabuk-do 54104 (KR); HA, Jae Seong, Gunsan-si, Jeollabuk-do 54103 (KR)
(74) Representative: Rau, Schneck & Hübner Patentanwälte Rechtsanwälte PartGmbB
(86) International application number: PCT/KR2023/017736
(87) International publication number: WO 2024/253269

(57) **Abstract**

The present invention relates to a method for preparing a carbonate solution of an alkali metal or an alkaline earth metal bis(fluorosulfonyl)imide, more specifically to a method for obtaining a carbonate solution of an alkali metal or an alkaline earth metal bis(fluorosulfonyl)imide by preparing an alkali metal or an alkaline earth metal bis(fluorosulfonyl)imide in a carbonate and a solvent other than a carbonate, and then removing the solvent other than the carbonate.

## Description

### Technical Field

The present invention relates to a method for preparing a carbonate solution of an alkali metal or alkaline earth metal bis(fluorosulfonyl)imide, and more particularly, to a method for obtaining a carbonate solution of an alkali metal or alkaline earth metal bis(fluorosulfonyl)imide by preparing an alkali metal or alkaline earth metal bis(fluorosulfonyl)imide in a carbonate and an organic solvent other than the carbonate, and removing the organic solvent other than the carbonate.

### Background Art

Recently, with the development of the advanced electronics industry, demands for portable electronic devices and electric vehicles and electric storage devices used thereto are increasing, so that the need for secondary batteries having high energy densities is growing.

Among the secondary batteries, a lithium secondary battery is rechargeable, has an energy density per unit weight that is three times or more that of a lead storage batter, a nickelcadmium battery, a nickel-hydride battery, a nickel-zinc battery, or the like, which is a conventional battery, and is capable of rapid charging. Therefore, the lithium secondary battery is widely used as a driving power source for portable electronic devices such as a video camera, a mobile phone, and a laptop computer and electric vehicles.

Accordingly, the importance of a lithium salt among electrolyte components that are suitable for the lithium secondary battery has emerged. In particular, a lithium bis(fluorosulfonyl)imide compound exhibits superior thermal and chemical stability and superior lithium ion conductivity as compared with LiPF₆ so as to be expected to have the prospects of application in the fields of lithium secondary batteries and capacitors.

Meanwhile, in order to achieve the above-described thermal stability, high ion conductivity, and low corrosivity by obtaining an alkali metal or alkaline earth metal bis(fluorosulfonyl)imide in a solid phase and using the alkali metal or alkaline earth metal bis(fluorosulfonyl)imide as a battery electrolyte, the alkali metal or alkaline earth metal bis(fluorosulfonyl)imide in the solid phase has to be free of moisture and residual solvents. In the preparation of the alkali metal or alkaline earth metal bis(fluorosulfonyl)imide, the moisture and the residual solvents are factors that hinder crystallization of the alkali metal or alkaline earth metal bis(fluorosulfonyl)imide, especially a lithium bis(fluorosulfonyl)imide so as to make the preparation impossible. Even when the crystallization has occurred, residual moisture and residual solvents reduce battery efficiency. In addition, when the alkali metal or alkaline earth metal bis(fluorosulfonyl)imide in the solid phase is exposed to air, a phenomenon of absorbing water so as to melt (deliquescence) may occur.

Therefore, there have been attempts to prepare the lithium bis(fluorosulfonyl)imide in a solution phase rather than a solid phase. U.S. Patent Publication No. 2016-0149262 discloses an attempt to prepare a lithium bis(fluorosulfonyl)imide by reacting a bis(fluorosulfonyl)imide with a lithium compound in a carbonate-based solvent, and use the lithium bis(fluorosulfonyl)imide in an electrolyte as it is.

### Disclosure

### Technical Problem

However, the above method does not address removal of moisture from the prepared lithium bis(fluorosulfonyl)imide. A high moisture content in the lithium bis(fluorosulfonyl)imide may act as a cause of battery corrosion so as to act as a factor of reducing battery performance, making it difficult to be used directly in an electrolyte. In addition, there is still a need for a method for preparing an alkali metal or alkaline earth metal bis(fluorosulfonyl)imide solution having higher purity (lower moisture content).

Accordingly, an object of the present invention is to provide a method for preparing an alkali metal or alkaline earth metal bis(fluorosulfonyl)imide solution having higher purity and a method for using the alkali metal or alkaline earth metal bis(fluorosulfonyl)imide solution in a secondary battery electrolyte.

### Technical Solution

To achieve the object described above, according to the present invention, there is provided a method for preparing a carbonate solution of an alkali metal or alkaline earth metal bis(fluorosulfonyl)imide, the method including:
1) inserting an ammonium bis(fluorosulfonyl)imide and an alkali metal salt or an alkaline earth metal salt into a reactor under nitrogen, adding a carbonate and an organic solvent other than the carbonate, and performing stirring at a room temperature for 1 to 7 hours; and
2) filtering the completed reaction solution of step 1) to obtain a filtrate and concentrating the filtrate under reduced pressure at 30 to 90 °C to remove the organic solvent other than the carbonate.

In addition, according to the present invention, there is provided a method for preparing a carbonate solution of an alkali metal or alkaline earth metal bis(fluorosulfonyl)imide, the method including:
a) preparing a bis(chlorosulfonyl)imide by reacting a chlorosulfonyl isocyanate and a chlorosulfonic acid under nitrogen in a first reactor;
b) inserting NH₄F and an organic solvent under nitrogen into a second reactor, and adding the bis(chlorosulfonyl)imide in the first reactor dropwise at 10 to 30 °C;
c) preparing the ammonium bis(fluorosulfonyl)imide by performing a reaction at 50 to 90 °C for 1 to 10 hours after the dropwise addition is completed;
d) obtaining the ammonium bis (fluorosulfonyl) imide in a solid phase by filtering a completed reaction completion solution of the step c) to obtain a filtrate, concentrating the filtrate under a reduced pressure to obtain a concentrated solution, and adding an organic solvent that hardly dissolves the ammonium bis(fluorosulfonyl)imide to the concentrated solution;
e) inserting an ammonium bis(fluorosulfonyl)imide and an alkali metal salt or an alkaline earth metal salt into a third reactor under nitrogen, adding a carbonate and an organic solvent other than the carbonate, and performing stirring at a room temperature for 1 to 7 hours; and
f) filtering the completed reaction solution of step 1) to obtain a filtrate and concentrating the filtrate under reduced pressure at 30 to 90 °C to remove the organic solvent other than the carbonate.

### Advantageous Effects

According to the present invention, a solution of an alkali metal or alkaline earth metal bis(fluorosulfonyl)imide may be obtained by reacting an ammonium bis(fluorosulfonyl)imide and an alkali metal salt or an alkaline earth metal salt in a carbonate and an organic solvent other than the carbonate, and the organic solvent other than the carbonate may be removed, so that a carbonate solution including an alkali metal or alkaline earth metal bis(fluorosulfonyl)imide having high purity can be obtained in a high yield.

In addition, according to the present invention, an alcohol-based, ether-based, ester-based, ketone-based, or amine-based solvent or the like capable of forming a hydrogen bond with water may be used as the organic solvent other than the carbonate to solubilize reactants and reagents so that an alkali metal or alkaline earth metal bis(fluorosulfonyl)imide can be obtained in a high yield even with a small amount of the solvent, and the solvent may form an azeotrope with water so that relatively easy water removal can be performed.

According to the present invention, the carbonate solution including the alkali metal or alkaline earth metal bis(fluorosulfonyl)imide having high purity may be used as an electrolyte as it is or by adding at least one selected from the group consisting of another solvent, an electrolyte salt, and an additive, so that an electrolyte having high purity can be provided, and an electrolyte including an electrolyte salt having no deliquescence problem in the alkali metal or alkaline earth metal bis(fluorosulfonyl)imide can be provided.

### Best Mode

Hereinafter, the present invention will be described in detail. Terms and words used in the present disclosure and the claims shall not be interpreted as being limited to general or dictionary meanings, but shall be interpreted as having meanings and concepts consistent with the technical idea of the present invention based on the principle that the inventor may appropriately define the concept of the term to describe his/her own invention in the best way.

The present invention may provide a method for preparing a carbonate solution of an alkali metal or alkaline earth metal bis(fluorosulfonyl)imide (MFSI), the method including:
1) inserting an ammonium bis(fluorosulfonyl)imide (NH₄FSI) and an alkali metal salt or an alkaline earth metal salt into a reactor under nitrogen, adding a carbonate and an organic solvent other than the carbonate, and performing stirring at a room temperature for 1 to 7 hours; and
2) filtering the completed reaction solution of step 1) to obtain a filtrate and concentrating the filtrate under reduced pressure at 30 to 90 °C to remove the organic solvent other than the carbonate.

The present inventors have endeavored to obtain a carbonate solution of an alkali metal or alkaline earth metal bis(fluorosulfonyl)imide (MFSI), and have found that in preparation of an MFSI (where M is an alkali metal or alkaline earth metal) by reacting the NH₄FSI with an alkali metal salt or an alkaline earth metal salt, when an organic solvent other than a carbonate is mixed with a carbonate solvent for use, and the organic solvent other than the carbonate is removed, a carbonate solution of an alkali metal or alkaline earth metal bis(fluorosulfonyl)imide (MFSI) having high purity may be obtained, thereby completing the present invention.

The organic solvent other than the carbonate may be an organic solvent capable of excellently dissolving the ammonium bis(fluorosulfonyl)imide and the alkali metal or alkaline earth metal bis(fluorosulfonyl)imide, and having a lower boiling point than the carbonate solvent used together with the organic solvent. Preferably, the organic solvent may have a boiling point that is lower than 130 °C.

According to one embodiment, the organic solvent other than the carbonate may be capable of forming a hydrogen bond with water. In this case, when the water is present while the organic solvent is removed, azeotropic distillation may be performed on the water so that the water may be removed. Preferably, the organic solvent other than the carbonate may be an alcohol-based, ether-based, ester-based, ketone-based, or amine-based solvent. More preferably, the organic solvent other than the carbonate may be methanol, ethanol, isopropanol, propanol, acetone, dimethyl ether, diethyl ether, isopropyl ether, ethyl acetate, butyl acetate, or the like.

According to the present invention, after the preparation of the MFSI, the organic solvent other than the carbonate may be removed, and a carbonate solution of the MFSI may be obtained, in which the organic solvent other than the carbonate may be removed by distillation under a reduced pressure after the reaction. The distillation under the reduced pressure may be performed at a temperature of 30 to 90 °C, preferably 40 to 80 °C, under a pressure of 0.01 Torr to 10 Torr. When water is present as a by-product, a pressure and a temperature at which azeotropic distillation may be performed on the water may be preferable.

As a result of performing the distillation under the reduced pressure, the organic solvent other than the carbonate may remain in the carbonate solution of the MFSI in an amount of 500 ppm by weight or less, preferably 300 ppm by weight or less, and more preferably 0 to 200 ppm by weight or less. Since the organic solvent other than the carbonate remains in the carbonate solution of the MFSI in the above amount, reduction in battery performance may be prevented when the organic solvent is used as a secondary battery electrolyte.

The carbonate solvent according to the present invention may be a chain or linear carbonate. According to one embodiment of the present invention, the carbonate may be a dimethyl carbonate, a diethyl carbonate, an ethyl methyl carbonate, an ethylene carbonate, a propylene carbonate, or the like.

The carbonate and the organic solvent other than the carbonate according to the present invention may be used to have 50 to 95 wt% of the carbonate and 5 to 50 wt% of the organic solvent other than the carbonate, preferably 60 to 90 wt% of the carbonate and 10 to 40 wt% of the organic solvent other than the carbonate, and more preferably 70 to 85 wt% of the carbonate and 15 to 30 wt% of the organic solvent other than the carbonate. When the carbonate and the organic solvent other than the carbonate are used in the above content, the ammonium bis(fluorosulfonyl)imide and the alkali metal or alkaline earth metal bis(fluorosulfonyl)imide may be excellently dissolved so as to prepare an alkali metal or alkaline earth metal bis(fluorosulfonyl)imide having high purity, and an organic metal other than the carbonate may be removed so as to obtain a carbonate solution having high purity.

According to the present invention, a reaction of the NH₄FSI with the alkali metal salt or the alkaline earth metal salt may be performed such that 1 mole or more, preferably more than 1 mole to 2 moles, and more preferably 1.1 moles to 2 moles of the alkali metal salt or the alkaline earth metal salt may be reacted with 1 mole of the NH₄FSI. When the alkali metal salt or the alkaline earth metal salt is used in the same mole as the NH₄FSI or in an excessive amount as compared with as the NH₄FSI, unreacted residual alkali metal salts or alkaline earth metal salts may be easily removed by filtration, so that an alkali metal or alkaline earth metal bis(fluorosulfonyl)imide solution having high purity may be obtained.

The alkali metal salt or the alkaline earth metal according to the present invention may be Li, Na, K, Rb, or Cs, preferably Li or Cs. The alkaline earth metal may be Be, Mg, Ca, Sr, Ba, or Ra, preferably Mg or Ca.

The alkali metal salt or the alkaline earth metal salt according to the present invention may be a halogen salt, a hydroxide salt, a carbonate salt, a bicarbonate salt (HCO₃ salt), an acetate salt, or the like of an alkali metal or alkaline earth metal.

In the preparation of the carbonate solution of the alkali metal or alkaline earth metal bis(fluorosulfonyl)imide according to the present invention, the carbonate solvent and the solvent other than the carbonate may be used to be 1 to 5 times, preferably 1 to 4 times, and more preferably 1 to 3 times the NH₄FSI in a weight ratio so as to allow the reaction to sufficiently proceed. When the solvent is used to be less than 1 time the NH₄FSI in a weight ratio, the reaction may not proceed at a sufficient speed, and when the solvent is used to be more than 5 times the NH₄FSI in a weight ratio, an excessive amount of the solvent has to be removed in order to be used as an electrolyte.

The reaction of the ammonium bis(fluorosulfonyl)imide (NH₄FSI) with the alkali metal salt or the alkaline earth metal salt may be performed at a room temperature under nitrogen for 1 to 7 hours.

After the reaction is completed, and before the organic solvent other than the carbonate is removed by the distillation under the reduced pressure, a reaction solution may be filtered through a filter cloth having a pore diameter of 0.5 to 1.5 µm in order to remove residual alkali metal salts or alkaline earth metal salts and the like.

According to the present invention, after processes of the filtration of the reaction solution and the distillation under the reduced pressure are performed, the carbonate solution of the MFSI may be obtained. The carbonate solution of the MFSI may be a solution configured to have preferably 10 to 50 wt% of the MFSI and 50 to 90 wt% of the carbonate solvent, and more preferably 20 to 40 wt% of the MFSI and 60 to 80 wt% of the carbonate. When the carbonate solution of the MFSI includes the MFSI in the above content, the carbonate solution of the MFSI may be used as an electrolyte as it is. In order to prepare a solution having an appropriate MFSI concentration, the carbonate solvent may be added.

In addition, the present invention may provide a method for preparing a carbonate solution of an alkali metal or alkaline earth metal bis(fluorosulfonyl)imide, the method including:
a) preparing a bis(chlorosulfonyl)imide by reacting a chlorosulfonyl isocyanate and a chlorosulfonic acid under nitrogen in a first reactor;
b) inserting NH₄F and an organic solvent under nitrogen into a second reactor, and adding the bis(chlorosulfonyl)imide in the first reactor dropwise at 10 to 30 °C;
c) preparing the ammonium bis(fluorosulfonyl)imide by performing a reaction at 50 to 90 °C for 1 to 10 hours after the dropwise addition is completed;
d) obtaining the ammonium bis(fluorosulfonyl)imide in a solid phase by filtering a completed reaction completion solution of the step c) to obtain a filtrate, concentrating the filtrate under a reduced pressure to obtain a concentrated solution, and adding an organic solvent that hardly dissolves the ammonium bis(fluorosulfonyl)imide to the concentrated solution;
e) inserting an ammonium bis(fluorosulfonyl)imide and an alkali metal salt or an alkaline earth metal salt into a third reactor under nitrogen, adding a carbonate and an organic solvent other than the carbonate, and performing stirring at a room temperature for 1 to 7 hours; and
f) filtering the completed reaction solution of step 1) to obtain a filtrate and concentrating the filtrate under reduced pressure at 30 to 90 °C to remove the organic solvent other than the carbonate.

In other words, according to the present invention, the ammonium bis(fluorosulfonyl)imide may be prepared by:
a) preparing a bis(chlorosulfonyl)imide by reacting a chlorosulfonyl isocyanate and a chlorosulfonic acid under nitrogen in a first reactor;
b) inserting NH₄F and an organic solvent under nitrogen into a second reactor, and adding the bis(chlorosulfonyl)imide in the first reactor dropwise at 15 to 20 °C;
c) preparing the ammonium bis(fluorosulfonyl)imide by performing a reaction at 50 to 90 °C for 1 to 10 hours after the dropwise addition is completed; and
d) obtaining the ammonium bis(fluorosulfonyl)imide in a solid phase by filtering a completed reaction completion solution of the step c) to obtain a filtrate, concentrating the filtrate under a reduced pressure to obtain a concentrated solution, and adding an organic solvent that hardly dissolves the ammonium bis(fluorosulfonyl)imide to the concentrated solution.

Describing each of the steps in detail, an insertion molar ratio of the chlorosulfonic acid to 1 mole of the chlorosulfonyl isocyanate in the step a) may be a molar ratio of more than 1, preferably 1.01 to 1.1. When the molar ratio of the chlorosulfonic acid to 1 mole of the chlorosulfonyl isocyanate is more than 1 mole as described above, the bis(chlorosulfonyl)imide may be prepared in a sufficient yield. After a temperature is increased to 90 to 130 °C under a nitrogen gas atmosphere, the reaction may be performed for 10 to 30 hours while maintaining the temperature and performing slow stirring. After the reaction is completed, a temperature of a reaction solution may be lowered to 50 °C or less.

In the step b), the ammonium bis(fluorosulfonyl)imide may be prepared by adding the bis(chlorosulfonyl)imide prepared in the step a) dropwise to the reactor into which the NH₄F and the organic solvent are inserted, and increasing the temperature. An insertion molar ratio of the HCSI and ammonium fluoride may be 2 to 6 moles, preferably 2.5 to 5.5 moles, and more preferably 3 to 5 moles of the NH₄F for 1 mole of the HCSI for a reaction. When the NH₄F is used in the above content for the HCSI, the HCSI may sufficiently become the NH₄FSI, while unreacted residual NH₄F and NH₄Cl, which is a by-product, may be easily removed by filtration.

Any polar aprotic solvent may be used as the organic solvent without limitation, and the organic solvent may be preferably butyl acetate, acetonitrile, dimethyl carbonate, or the like. The organic solvent may be used to be 2 to 8 times, preferably 3 to 7 times, and more preferably 3.5 to 6 times the HCSI in a weight ratio. When the solvent is used to be less than 2 times the HCSI in a weight ratio, the reaction may not proceed at a sufficient speed, and when the solvent is used to be greater than 8 times the HCSI in a weight ratio, the reaction may not be accelerated, and an excessive amount of the solvent has to be removed in a subsequent step of concentration under a reduced pressure.

After the dropwise addition of the HCSI is completed, the temperature may be increased to 50 to 90 °C under a nitrogen gas atmosphere, and the reaction may be performed for 1 to 10 hours while maintaining the temperature and performing slow stirring, thereby performing a NH₄FSI preparation reaction.

After the NH₄FSI preparation reaction is completed, the temperature may be lowered to a room temperature, the solution in which the reaction is completed may be filtered through a filter cloth, the concentration under the reduced pressure may be performed under an atmosphere at a temperature of 40 to 80 °C, cooling may be performed, and a non-polar organic solvent may be inserted, so that NH₄FSI crystals may be generated, which are filtered to obtain NH₄FSI. The non-polar organic solvent may be a poorly soluble organic solvent for the NH₄FSI, and may be preferably toluene, hexane, dichloromethane, or the like.

According to the present invention, the NH₄FSI prepared by the above method may be reacted with the alkali metal salt or the alkaline earth metal salt in a mixed solvent of the carbonate solvent and the organic solvent other than the carbonate, and the organic solvent other than the carbonate may be removed after the reaction is completed, so that the carbonate solution of the alkali metal or alkaline earth metal bis(fluorosulfonyl)imide may be obtained. The above step may be identical to the step described above.

### Mode for Invention

Hereinafter, exemplary examples will be proposed to help understanding of the present invention. However, examples that will be describe below are provided merely to facilitate understanding of the present disclosure, and the present invention is not intended thereto.

### Examples

### Example 1: Preparation of Lithium Bis(fluorosulfonyl)imide in Liquid Phase

### (1) Preparation of HCSI

A chlorosulfonyl isocyanate and a chlorosulfonic acid were inserted into a dried reactor, the reactor was sealed, and a nitrogen gas was inserted. In this case, an insertion molar ratio of the chlorosulfonic acid to the chlorosulfonyl isocyanate was a molar ratio of 1:1.05. In addition, a temperature was increased to 120 °C under a nitrogen gas atmosphere, and a reaction was performed for 24 hours while maintaining the temperature and performing slow stirring. After the reaction was completed, a temperature of a reaction solution was lowered to 50 °C so as to obtain a bis(chlorosulfonyl)imide (HCSI).

### (2) Preparation of NH₄FSI

Ammonium fluoride and butyl acetate were inserted into a dried reactor, the reactor was sealed, and a nitrogen gas was inserted. In addition, the HCSI prepared in the reaction of the step (1) was slowly added dropwise to the reactor under a nitrogen gas atmosphere. In this case, an internal temperature of the reactor was maintained at 15 to 20 °C, and an insertion molar ratio of the HCSI and the ammonium fluoride was a molar ratio of 1:4. In addition, the butyl acetate, which is an organic solvent, was used to be 4.5 times the HCSI in a weight ratio. After the dropwise addition was completed, the temperature was increased to 75 °C under the nitrogen gas atmosphere, and a reaction was performed for 4 hours while maintaining the temperature and performing slow stirring.

After the reaction was completed, a temperature of the reactor was lowered to a room temperature, the solution in which the reaction is completed was filtered through a filter cloth, concentration under a reduced pressure was performed under an atmosphere at a temperature of 60 °C, cooling was performed, and toluene, which as a non-polar organic solvent, was inserted to be 2 times the HCSI in a weight ratio. In addition, a recrystallized reaction solution was filtered through a Nutsche filter so as to obtain ammonium bis(fluorosulfonyl)imide (NH₄FSI) crystals.

A yield of synthesized NH₄FSI crystals was 85.7%, and purity was 98.2%.

### (3) Preparation of LiFSI in Liquid Phase

The NH₄FSI, lithium hydroxide, methanol, and an ethyl methyl carbonate were inserted into a dried reactor, the reactor was sealed, and a nitrogen gas was inserted. In this case, an internal temperature of the reactor was maintained at a room temperature, and an insertion molar ratio of the NH₄FSI and the lithium hydroxide was a molar ratio of 1:1.2. In addition, the organic solvent was used to be 2 times the NH₄FSI in a weight ratio, and a content ratio of the methanol and the ethyl methyl carbonate was 2:8. In addition, a reaction was performed for 3 hours while maintaining the room temperature and performing slow stirring under a nitrogen gas atmosphere.

After the reaction was completed, the solution in which the reaction is completed was filtered through a filter cloth, and concentration under a reduced pressure was performed under an atmosphere at a temperature of 50 °C so as to concentrate the methanol to have a concentration of 100 ppm or less. After removal of a methanol solvent was confirmed, an ethyl methyl carbonate solvent was inserted to adjust a weight ratio of a lithium bis(fluorosulfonyl)imide (LiFSI) and the organic solvent to 3:7 so as to obtain LiFSI in a liquid phase.

It was found that a synthesized LiFSI in a liquid phase has a yield of 95.2%, purity of 99.93%, and a moisture content of 10.3 ppm.

A LiFSI content was calculated by measuring a content of the organic solvent through gas chromatography.

Contents of F⁻, Cl⁻, and SO₄²⁻ ions were measured through ion chromatography.

### Examples 2 to 15

Examples 2 to 15 were implemented such that a lithium bis(fluorosulfonyl)imide in a liquid phase was prepared by the same method as in Example 1, while in a preparation process of Step 3, a reaction solvent was changed from the ethyl methyl carbonate to a carbonate solvent as shown in Table 1 below, and a ratio of the reaction solvent to a methanol solvent was changed as shown in Table 1 below.

**[Table 1]**

| Classifica tion | LiFSI in liquid phase (Step 3) | | | | | | | |
|---|---|---|---|---|---|---|---|---|
| | Solvent 1 | Solvent 2 | Ratio | Impurities (ppm by weight) | | | | Yield (%)/Purity (%) |
| | | | | F | Cl | SO₄ | Moisture | |
| Example 1 | Ethyl methyl carbonate | Methanol | 8:2 | 21 | 0.2 | 28 | 10.3 | 95.2/99.93 |
| Example 2 | Ethyl methyl carbonate | Methanol | 9:1 | 32 | 0.5 | 34 | 12.6 | 94.8/99.52 |
| Example 3 | Ethyl methyl carbonate | Methanol | 7:3 | 45 | 1.0 | 37 | 9.7 | 92.5/99.18 |
| Example 4 | Dimethyl carbonate | Methanol | 9:1 | 41 | 0.9 | 42 | 16.4 | 93.1/99.02 |
| Example 5 | Dimethyl carbonate | Methanol | 8:2 | 32 | 0.7 | 34 | 15.1 | 94.3/99.45 |
| Example 6 | Dimethyl carbonate | Methanol | 7:3 | 44 | 1.5 | 46 | 14.6 | 91.4/98.78 |
| Example 7 | Diethyl carbonate | Methanol | 9:1 | 54 | 1.3 | 48 | 12.3 | 92.5/98.84 |
| Example 8 | Diethyl carbonate | Methanol | 8:2 | 42 | 1.1 | 40 | 11.7 | 93.1/98.95 |
| Example 9 | Diethyl carbonate | Methanol | 7:3 | 61 | 1.7 | 52 | 9.1 | 90.2/98.33 |
| Example 10 | Ethylene carbonate | Methanol | 9:1 | 61 | 1.5 | 54 | 13.5 | 89.8/97.96 |
| Example 11 | Ethylene carbonate | Methanol | 8:2 | 50 | 1.4 | 47 | 12.2 | 91.7/98.73 |
| Example 12 | Ethylene carbonate | Methanol | 7:3 | 67 | 1.9 | 61 | 10.7 | 88.9/97.88 |
| Example 13 | Propylene carbonate | Methanol | 9:1 | 71 | 1.6 | 60 | 12.9 | 89.3/97.65 |
| Example 14 | Propylene carbonate | Methanol | 8:2 | 68 | 1.2 | 55 | 10.9 | 90.5/98.40 |
| Example 15 | Propylene carbonate | Methanol | 7:3 | 79 | 1.8 | 66 | 9.5 | 87.6/97.32 |

Examining measurement results of impurity contents, yields, and purity in Table 1, it may be found that the lithium bis(fluorosulfonyl)imide in the liquid phase prepared in the process of synthesizing the LiFSI in the liquid phase (Step 3) generally has a yield of 87.6% or more, high purity of 97.32% or more, and a low moisture content of 16.4 ppm or less.

In particular, when a ratio of the carbonate solvent and the methanol was 8:2 for use, a LiFSI in a liquid phase with the lowest impurity content, the highest yield, and the highest purity was prepared. Among the above examples, it may be found that use of the ethyl methyl carbonate is relatively advantageous in terms of quality over other carbonate-based solvents.

### Comparative Examples 1 to 5: Preparation of Lithium Bis(fluorosulfonyl)imide (LiFSI) in Liquid Phase

Comparative Examples 1 to 5 were implemented such that a lithium bis(fluorosulfonyl)imide in a liquid phase was prepared by the same method as in Example 1, while in the preparation process of Step 3, a carbonate solvent was varied without using a mixed solvent.

**[Table 2]**

| Classificat ion | LiFSI in liquid phase (Step 3) | | | | | |
|---|---|---|---|---|---|---|
| | Solvent | Impurities (ppm by weight) | | | | Yield (%) /Purity (%) |
| | | F | Cl | SO₄ | Moisture | |
| Comparative Example 1 | Ethyl methyl carbonate | 83 | 9.8 | 81 | 115.5 | 88.4/98.96 |
| Comparative Example 2 | Dimethyl carbonate | 92 | 11.2 | 89 | 141.3 | 85.2/98.17 |
| Comparative Example 3 | Diethyl carbonate | 112 | 14.5 | 103 | 163.7 | 84.6/97.82 |
| Comparative Example 4 | Ethylene carbonate | 127 | 18.6 | 116 | 193.5 | 82.5/95.84 |
| Comparative Example 5 | Propylene carbonate | 142 | 19.5 | 133 | 228.4 | 80.4/95.26 |

Examining measurement results of impurity contents, yields, and purity in Table 2, it may be found that the lithium bis(fluorosulfonyl)imide in the liquid phase prepared in the process of synthesizing the LiFSI in the liquid phase (Step 3) generally has a yield of 88.4% or less, low purity of 98.96% or less, and a high moisture content of 115.5 ppm or less.

In particular, when the carbonate solvent was used alone, it may be found that a content of moisture contained in a product is high, so that a content of impurities generated by decomposition of the LiFSI is also increased.

### Examples 16 to 24

Additionally, in order to check a moisture removal effect in other organic solvents capable of forming a hydrogen bond, Examples 16 to 24 were implemented such that a lithium bis(fluorosulfonyl)imide in a liquid phase was prepared by the same method as in Example 1, while in a preparation process of Step 3, a reaction solvent was configured to have varying ratios of isopropyl ether, ethyl acetate, and acetone to an ethyl methyl carbonate.

**[Table 3]**

| Classification | LiFSI in liquid phase (Step 3) | | | | | | | |
|---|---|---|---|---|---|---|---|---|
| | Solvent 1 | Solvent 2 | Ratio | Impurities (ppm by weight) | | | | Yield (%) /Purity (%) |
| | | | | F | Cl | SO₄ | Moisture | |
| Example 16 | Ethyl methyl carbonate | Isopropyl ether | 9:1 | 36 | 2.4 | 38 | 15.7 | 92.9/99.16 |
| Example 17 | Ethyl methyl carbonate | Isopropyl ether | 8:2 | 22 | 1.1 | 30 | 14.6 | 94.6/99.62 |
| Example 18 | Ethyl methyl carbonate | Isopropyl ether | 7:3 | 28 | 1.9 | 45 | 13.9 | 92.4/99.02 |
| Example 19 | Ethyl methyl carbonate | Ethyl acetate | 9:1 | 34 | 4.1 | 46 | 15.5 | 89.2/99.10 |
| Example 20 | Ethyl methyl carbonate | Ethyl acetate | 8:2 | 48 | 5.9 | 55 | 14.8 | 86.5/98.94 |
| Example 21 | Ethyl methyl carbonate | Ethyl acetate | 7:3 | 55 | 5.3 | 58 | 13.6 | 84.4/98.65 |
| Example 22 | Ethyl methyl carbonate | Acetone | 9:1 | 62 | 8.7 | 50 | 19.2 | 84.2/98.76 |
| Example 23 | Ethyl methyl carbonate | Acetone | 8:2 | 53 | 9.1 | 65 | 18.4 | 83.7/97.85 |
| Example 24 | Ethyl methyl carbonate | Acetone | 7:3 | 69 | 9.9 | 70 | 17.9 | 80.3/97.24 |

Examining measurement results of impurity contents, yields, and purity in Table 3, it may be found that the lithium bis(fluorosulfonyl)imide in the liquid phase prepared in the process of synthesizing the LiFSI in the liquid phase (Step 3) generally has a yield of 80.3% or more, high purity of 97.24% or more, and a low moisture content of 19.2 ppm or less.

In particular, among the organic solvents capable of forming a hydrogen bond, it may be found that use of the isopropyl ether and the ethyl methyl carbonate is relatively advantageous in terms of quality over other organic solvents.

### Industrial Applicability

A carbonate solution of an alkali metal or alkaline earth metal bis(fluorosulfonyl)imide according to the present invention may be used as a secondary battery electrolyte as it is.

## Claims

1. A method for preparing a carbonate solution of an alkali metal or alkaline earth metal bis(fluorosulfonyl)imide, the method comprising:
1) inserting an ammonium bis(fluorosulfonyl)imide and an alkali metal salt or an alkaline earth metal salt into a reactor under nitrogen, adding a carbonate and an organic solvent other than the carbonate, and performing stirring at a room temperature for 1 to 7 hours; and
2) filtering the completed reaction solution of step 1) to obtain a filtrate and concentrating the filtrate under reduced pressure at 30 to 90 °C to remove the organic solvent other than the carbonate.

2. The method of claim 1, wherein the ammonium bis(fluorosulfonyl)imide is prepared by steps including:
a) preparing a bis(chlorosulfonyl)imide by reacting a chlorosulfonyl isocyanate and a chlorosulfonic acid under nitrogen in a first reactor;
b) inserting NH₄F and an organic solvent under nitrogen into a second reactor, and adding the bis(chlorosulfonyl)imide in the first reactor dropwise at 10 to 30 °C;
c) preparing the ammonium bis(fluorosulfonyl)imide by performing a reaction at 50 to 90 °C for 1 to 10 hours after the dropwise addition is completed; and
d) obtaining the ammonium bis(fluorosulfonyl)imide in a solid phase by filtering a completed reaction completion solution of the step c) to obtain a filtrate, concentrating the filtrate under a reduced pressure to obtain a concentrated solution, and adding an organic solvent that hardly dissolves the ammonium bis(fluorosulfonyl)imide to the concentrated solution.

3. The method of claim 1, wherein the organic solvent other than the carbonate is an organic solvent capable of forming a hydrogen bond with water, which is a solvent capable of performing azeotropic distillation on water when the water is present while the organic solvent is removed.

4. The method of claim 3, wherein the organic solvent other than the carbonate is an alcohol-based, ether-based, ester-based, ketone-based, or amine-based solvent.

5. The method of claim 1, wherein the organic solvent other than the carbonate is methanol, ethanol, isopropanol, propanol, acetone, dimethyl ether, diethyl ether, isopropyl ether, ethyl acetate, or butyl acetate.

6. The method of claim 1, wherein the carbonate is a dimethyl carbonate, a diethyl carbonate, an ethyl methyl carbonate, an ethylene carbonate, or a propylene carbonate.

7. The method of claim 1, wherein the carbonate and the organic solvent other than the carbonate are configured to have 50 to 95 wt% of the carbonate and 5 to 50 wt% of the organic solvent other than the carbonate.

8. The method of claim 1, wherein a reaction of the NH₄FSI with the alkali metal salt or the alkaline earth metal salt is performed such that 1 mole or more of the alkali metal salt or the alkaline earth metal salt is provided for 1 mole of the NH₄FSI.

9. The method of claim 1, wherein an alkali metal or alkaline earth metal in the carbonate solution of the alkali metal or alkaline earth metal bis(fluorosulfonyl)imide is Li, Na, K, Rb, Cs, Mg, or Ca.

10. The method of claim 1, wherein a content of the carbonate solvent and the solvent other than the carbonate is 1 to 5 times the ammonium bis(fluorosulfonyl)imide in a weight ratio.

11. The method of claim 1, wherein the carbonate solution of an alkali metal or alkaline earth metal bis(fluorosulfonyl)imide is preferably configured to have 10 to 50 wt% of the alkali metal or alkaline earth metal bis(fluorosulfonyl)imide and 50 to 90 wt% of a carbonate solvent.
